# EUROPEAN PATENT SPECIFICATION

(11) **EP 2 159 075 B1**
(45) Date of publication and mention of the grant of the patent: **14.11.2012**
(21) Application number: 09168491.0
(22) Date of filing: 24.08.2009
(51) Int. Cl.: B60C 9/00, B60C 15/06, B60C 9/20, B60C 9/22

(54) **Tire containing chopped carbon fibers**
Reifen mit zerhackten Kohlenstofffasern
Pneu contenant des fibres de carbone coupées

(30) Priority: 29.08.2008 US 201768
(43) Date of publication of application: 03.03.2010
(73) Proprietor: The Goodyear Tire & Rubber Company, Akron, OH 44316-0001 (US)
(72) Inventor: Botts, Bina Patel, Cuyahoga Falls, OH 44223 (US); Puhala, Aaron Scott, Kent, OH 44240 (US); Sandstrom, Paul Harry, Cuyahoga Falls, OH 44223 (US); Westgate, Walter Kevin, Uniontown, OH 44685 (US); Barnette, Rachel Rebekah, Fairlawn, OH 44333 (US)
(74) Representative: Kutsch, Bernd

(56) References cited:
- EP-A- 0 691 217
- EP-A- 0 949 090
- EP-A- 1 792 755
- EP-A- 1 923 233
- EP-A- 1 990 218
- JP-A- 2004 249 888

## Description

### I. Background of the Invention

This invention relates to a tire comprising chopped carbon fibers in an insert, apex and/or belt overlay.

US-A- 20070125469 discloses a pneumatic radial tire having a carcass and a tread. The carcass has at least one carcass reinforcing ply and opposing bead portions. Each bead portion has a bead core and a bead apex. The tire has a bead reinforcing ply comprising chopped carbon fiber in the amount of 0.5 to 30 parts per hundred rubber located in only one bead portion of the tire, with the bead reinforcing ply being adjacent to the carcass reinforcing ply.

US-A- 5,718,781 discloses a rubber tire composed of carbon black reinforced rubber carcass and having a rubber tread which is quantitatively reinforced with silica and contains a minor amount of carbon black reinforcement and/or carbon fibers.

Various carbon fibers, including short fibers and carbon cords, have been suggested for use in various rubber compositions, including tire treads. For example, see US-B- 5,323,829 and US-B- 5,718,781. A multi-filament carbon yarn has been suggested for reinforcement of rubber compositions in which the yarn is coated with a composite of resorcinol-formaldehyde reaction product, a vinylpyridine-styrene butadiene terpolymer, an acrylonitrile-butadiene copolymer and urea. For example, see US-B- 6,077,606 and US-B- 6,350,492.

WO-A- 2007/129580 and EP-A- 1 990 218 describe a chopped carbon fiber as sidewall reinforcement in a run-flat tire.

EP-A- 0 949 090 describes the use of chopped carbon fibers in the ply or the belt of a tire.

JP-A- 2004-249880 describes the use of a carbon fiber reinforcement in a sidewall, an outer rubber layer or an internal sidewall rubber insert.

EP-A- 1 923 233 describes a sidewall component containing a dispersion of adhesive coated short carbon fiber reinforcement.

### II. Summary of the Invention

The invention relates to a tire according to claim 1.

Dependent claims refer to preferred embodiments of the invention.

For this invention, short, preferably discontinuous carbon fibers are used for the rubber reinforcement which have been coated (pre-coated) with an adhesive composition (to aid, or enhance, adhesion of the carbon fibers to the elastomer) comprising a vinylpyridine-styrene butadiene terpolymer, an acrylonitrile-butadiene copolymer and optionally urea (RFL adhesive coating).

In practice, such carbon fibers are preferably in a form of a cord comprising twisted (cabled) carbon filaments having a carbon filament count (number of carbon filaments in the cord) preferably within a range of from 1,000 to 48,000. The average filament length (cord length) is preferably within a range of from 1 mm to 10 mm, optionally in a range of from 3 mm to 5 mm and an average diameter within a range of from 2 to 15 microns.

Representative of an adhesive coated carbon yarn is a carbon multi-filament yarn impregnated with a resorcinol-formaldehyde-rubber composite. The adhesive coated multi-filament yarn may then chopped into the short yarn fibers for use in this invention.

Such resorcinol-formaldehyde composite may be, for example, comprised of, and the product of, a resorcinol, formaldehyde, vinylpyridine/styrene/butadiene terpolymer latex and acrylonitrile/butadiene copolymer latex blend, which may optionally include urea. After application to and encapsulation of the carbon multi-filament yarn, the blend is dried and cured at an elevated temperature in a sense of allowing the latices to dry and the resorcinol and formaldehyde to react and thereby form a resin within the resultant rubber and to thereby form the resorcinol-formaldehyde resin-rubber composite coated carbon filaments. The resorcinol and formaldehyde react with each other in situ within the latex binder to form an adhesive resin. The rubber copolymer(s), in one aspect, form a resultant binder for the resin. For an example of such coated carbon fibers, see US-B- 6,077,606. For convenience, the adhesive coating may be referred to herein as an RFL (resorcinol-formaldehyde-latex) adhesive coating. If desired, the carbon multi-filament yarn may be pre-treated by impregnating the yarn with an epoxy resin prior to its impregnation with the RFL composite in order to provide enhanced bonding of the filaments to the RFL composite.

The yarn comprising the RFL adhesive coated (encapsulated) carbon filaments is then chopped into short filamentary lengths and the coated filaments separated into short fibers, all by suitable means, for blending with and dispersing into the rubber composition.

A representative example of a multi-filament carbon yarn for such RFL treatment, or coating, is, for example, T700GC^{™} from Toray Industries. In practice, the carbon yarn may contain, for example, a range of from 1,000 to 48,000 carbon filaments.

In the description of this invention, the terms "rubber" and "elastomer" may be used interchangeably, unless otherwise provided. The terms "rubber composition", "compounded rubber" and "rubber compound" may be used interchangeably to refer to "rubber which has been blended or mixed with various ingredients and materials". The terms "cure" and "vulcanize" may be used interchangeably unless otherwise provided: In the description of this invention, the term "phr" refers to parts of a respective material per 100 parts by weight of rubber, or elastomer.

One advantage of this invention is that the addition of chopped carbon fibers can increase low strain stiffness and provide improved thermal conductivity.

Another advantage of this invention is that the addition of chopped carbon fibers to the apex increases apex stiffness and provides improved handling.

Yet another possible advantage of this invention is that the addition of chopped carbon fibers to the EMT insert can provide higher stiffness, which will provide more support during run flat conditions.

Yet another possible advantage of this invention is that increased thermal conductivity can provide cooler running during normal operation as a result of increased heat dissipation and also a reduction of heat buildup during run flat conditions.

### III. Brief Description of the Drawings

The invention may take physical form in certain parts and arrangement of parts, embodiments of which will be described in detail in this specification and illustrated in the accompanying drawings which form a part hereof and wherein:
FIGURE 1 is a cross-section of a tire, showing the apexes;
FIGURE 2 is a cross-section of a EMT tire, showing the EMT insert; and,
FIGURE 3 is a cross-section of the tire showing the belt overlays.

### IV. Definitions

The following terms may be used throughout the descriptions presented herein and should generally be given the following meaning unless contradicted or elaborated upon by other descriptions set forth herein.

"Apex" means an elastomeric filler located radially above the bead core and preferably between the plies and the turn-up ends of the plies. The apex is sometimes referred to as a "bead filler".

"Axial" and "axially" mean the lines or directions that are parallel to the axis of rotation of the tire.

"Carcass" means the tire structure apart from the belt structure, tread, undertread, and sidewall rubber over the plies, but including the bead cores.

"Crown" or "tire crown" means the tread, tread shoulders, and the immediately adjacent portions of the sidewalls.

"dTex" means a unit of the linear density of a continuous filament or yarn, equal to 1/10th of a tex or 9/10th of a denier.

"EMT" means extended mobility technology tires.

"Radial" and "radially" mean directions toward or away from the axis of rotation of the tire.

"Sidewall" means that component which comprises a portion of the outside surface of a tire between the tread and the bead.

"tow" means synthetic filaments prior to spinning.

"tow size" means the number of fiber filaments per tow size.

### V. Detailed Description of the Invention

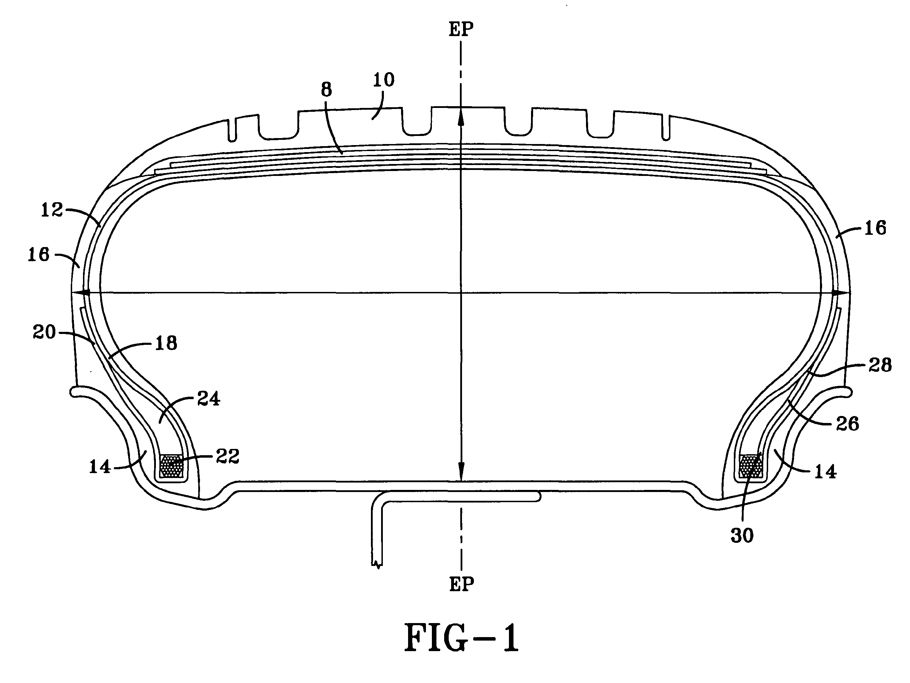

FIG. 1 illustrates a pneumatic tire in accordance with one embodiment of the present invention. The pneumatic tire is a low aspect radial tire, designed for use as a high performance tire. The pneumatic tire has a carcass, a belt structure 8 radially outward of the carcass, and a tread 10 radially outward of the belt structure 8. The belt structure 8 may be any of the type conventionally used for a passenger vehicle tire, and generally will include two reinforcement plies of cords with overlay plies covering at least the axially outer edges of the individual belt reinforcement plies.

The carcass has at least one carcass reinforcing ply 12, a pair of opposing bead portions 14 and a pair of opposing sidewalls 16. The tire of FIG. 1 is illustrated as having one carcass reinforcing ply 12, but it is within the skill of those in the art to form the tire of FIG. 1 as a two ply carcass. The ply 12 has a main portion 18 extending through the opposing sidewalls 16 and two turnup portions 20 initiating in the bead portions 14. Each turnup portion 20 of the carcass reinforcing ply 12 extends from the main portion 18 of the carcass reinforcing ply 12, and is wrapped about a bead core 22 and a bead apex 24 in the bead portion 20; thus enveloping, at a minimum, the bead core 22 and the lower portion of the bead apex 24 in each bead portion 14.

The chopped carbon fibers in the apex 24 preferably have a denier in the range of 667 dTex to 16,000 dTex, with one embodiment having a denier in the range of 4,000 to 8,000 dTex such as 6000 dTex. The tow size range of the fibers is 1,000 to 24,000, with one embodiment having a range of 6,000 to 12,000 such as 9000. The fibers have a Young's modulus of 206842718400 Pascal - 620528155200 Pascal (30,000-90,000 kpsi), with one embodiment having a range of 206842718400 Pascal - 275790291200 Pascal such as 241316504800 Pascal (30,000-40,000 kpsi) such as 206842718400 Pascal - 275790291200 Pascal such as 241316504800 Pascal (35000 kpsi).

The fibers may have a tensile strength in the range of 2757902916 Pascal to 6894757290 Pascal (400,000 to 1000,000 psi), with one embodiment having a range of 4136854374 Pascal - 5102120395 Pascal such as 4619487384 Pascal (600,000 to 740,000 psi) such as 4136854374 Pascal - 5102120395 Pascal such as 4619487384 Pascal (670000 psi). Additionally, the fibers have a maximum elongation in the range of 1.0 to 3.0%, and in one embodiment, in the range of 1.6 to 1.8%.

In one embodiment of the invention, as illustrated, the bead reinforcing ply 26 is located within the turnup envelope and directly adjacent to the bead apex 24. The bead reinforcing ply 26 extends from the initial point near the bead core 22 to a radially outer terminal end 28. The radially inner initial point 30 of the bead reinforcing ply 26 does not have any overlap with the bead core 22, but is spaced from the radially outer surface of the bead core 22 by a distance of at least 1.5 mm; preventing the end of the bead reinforcing ply 26 from being pinched between the bead core 22 and the carcass reinforcing ply 12.

The bead reinforcing ply 26 may be located in a variety of locations in the outboard side bead portion 14 in addition to the illustrated location of being axially outward of the carcass reinforcing ply turnup portion 20. The bead reinforcing ply 26 may be between the apex 24 and the carcass reinforcing ply turnup portion 20 (see FIG. 1), between the apex 24 and the carcass reinforcing ply main portion 18, or between the carcass reinforcing ply main portion 18 and a tire innerliner. In one embodiment, the two apexes could have different amounts of carbon fiber, and contemplates a situation wherein one apex 24 has no carbon fiber at all.

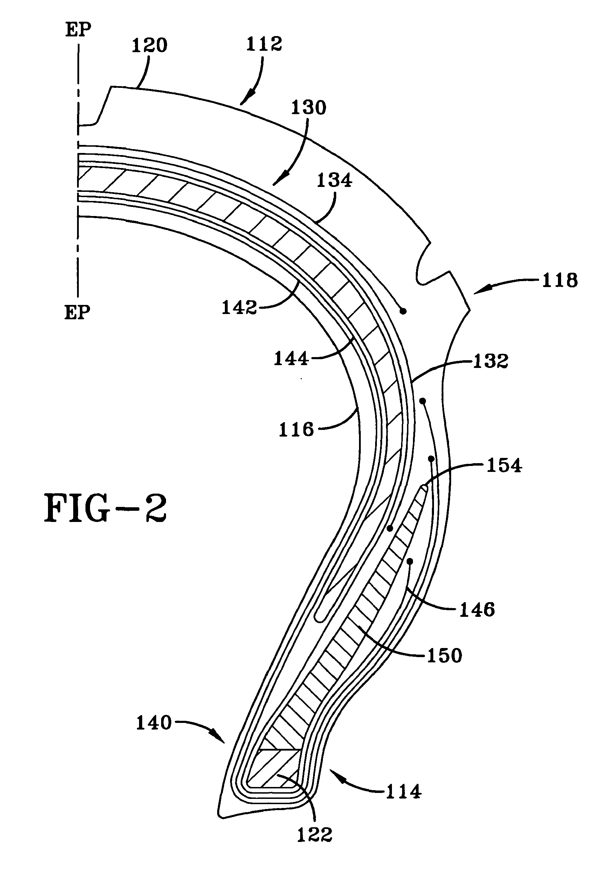

With reference now to FIG. 2, the term "runflat" is generally used to describe a tire that is designed such that the tire structure alone, and in particular the structure of the sidewalls, has sufficient strength and rigidity to support the vehicle load when the tire is operated without being inflated. The sidewalls and internal surfaces of such runflat tires or EMT tires do not collapse or buckle due to their rigidity, and the prevailing designs of such tires do not otherwise contain or use other supporting structures or devices to prevent the tire from collapsing. Examples of such other supporting structures are devices that might be contained within the tire and which experience no loading during normal inflated operation. In general, runflat tires or EMT tires incorporate sidewalls that are thicker and/or stiffer so that the tire's load can be carried by an uninflated tire with minimum adverse effects upon the tire itself and upon vehicle handling until such reasonable time as the tire can be repaired or replaced. The typical methods used in sidewall thickening and stiffening include the incorporation of circumferentially disposed EMT inserts 150 in the inner peripheral surface of the sidewall portion of the carcass, which is the region in the tire usually having the lowest resistance to deformation under vertical loading. In such runflat tire designs, each sidewall is thickened in the region between the bead and the tread shoulder. The EMT inserts in each sidewall are generally crescent-shaped in cross-sectional view, in order to conform to the shape of the sidewalls. Such wedge reinforced sidewalls, when operated in the uninflated condition, experience a net compressive load in the region of the sidewall that is closest to the road-contacting portion of the tread. More specifically, the bending stresses on the sidewalls are such that the axially outwardmost portions of the reinforced sidewalls experience tensile stresses while the axially inward portions experience compressive stresses during runflat operation.

With continuing reference to FIG. 2, FIG. 2 is illustrative of a tire 100 having a tread region 112, two bead regions 114 (only one of which is shown) and two sidewalls 116 (only one of which is shown). Each sidewall extends between a respective one of the bead regions 114 and the tread region 112. The tread region 112 comprises a tread 120. The bead region 114 comprises a bead (or bead bundle) 122. A shoulder 118 of the tire is defined as the upper portion of sidewall 116 just below the lateral edge of the tread 120. A belt structure, or belt package 130, is disposed in the tread region 112, below the tread 120. A number of reinforcing plies 140 are disposed below the belt structure 130 and extend laterally beyond the lateral edges of the tread, radially in the sidewall to the bead(s) 122, wrap approximately 180 degrees around the beads, and extend radially back up into the sidewall 116. The belt package 130 preferably comprises at least two belts--a first belt 132 and a second belt 134. The second belt 134 is disposed radially outward from the first belt 132. The belts 132, 134 both extend laterally across the tread region 112, and circumferentially around the tire, in a conventional manner. Each belt 132, 134 has lateral edges. In this embodiment, the tire 100 has at least three reinforcing, or carcass plies--a first ply 142, a second ply 144, and a third ply 146. The second ply 144 is radially outward from the first ply 142. The third ply 146 is radially outward from the second ply 144. The plies 142, 144, 146 all extend from one bead 122, through the sidewall 116, across the tread region 112, through the other sidewall (not shown) to the other bead (not shown) of the tire, in a conventional manner. An EMT insert 150 is disposed atop the bead 122. The insert 150 is formed of high-modulus elastomer and extends into the sidewall 116 towards the tread region 112. In one embodiment, the EMT insert 150 could be coupled with an apex, wherein the apex would be stiffer than the insert 150, and the insert 150 could overlay the apex.

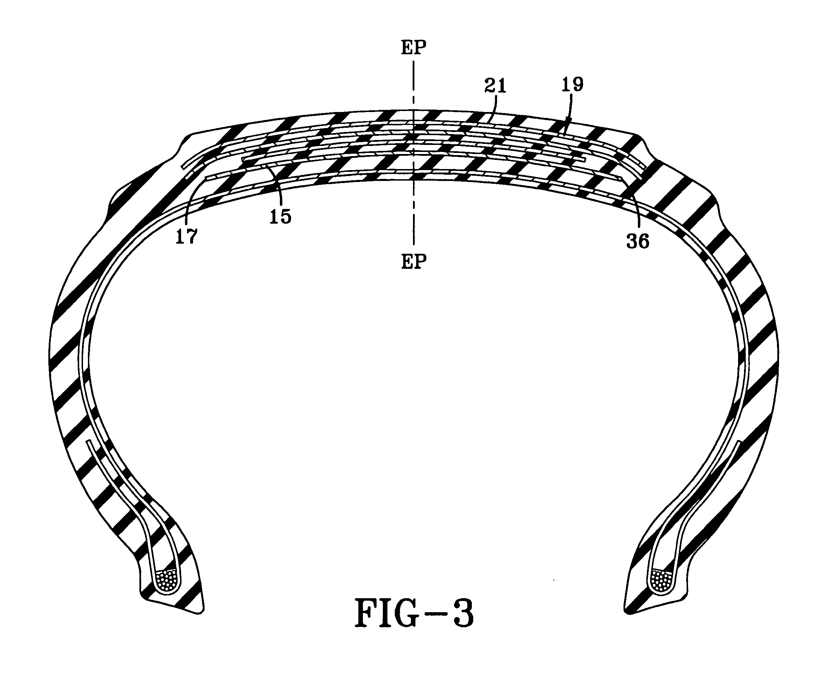

With reference now to FIG. 3, an overlay structure 19 is disposed radially outwardly of the belt reinforcing structure 21 and is wrapped circumferentially thereabout. A tread of an elastomeric compound is disposed radially outwardly of the overlay structure 19. Preferably, the overlay structure 19 extends axially outwardly of the lateral edges 17, 32 of the widest belt ply 15. In the embodiment illustrated in FIG. 3, the overlay structure comprises a sheet of an elastomer having side by side nylon cables embedded therein with the sheet having an axial width which is greater than the distance between the lateral edges 17, 32 of the widest belt ply 15 of the belt reinforcing structure. The overlay ply is usually applied to the unvulcanized tire as an annular layer, or layers, with the two end portions of the ply slightly overlapping to form a splice.

In accordance with the invention, the short carbon fibers have an average length within a range of from 1 to 10 millimeters, alternately within a range of from 3 to 5 millimeters, and an average diameter within a range of from 2 to 15 microns.

In accordance with the invention, the carbon fibers have a coating thereon such as an RFL adhesive coating comprising a resorcinol-formaldehyde resin and a polymeric binder.

As hereinbefore discussed, such RFL adhesive, as is known to those having skill in such art, and as further discussed in the aforesaid US-B- 6,077,606, may be, for example a resorcinol-formaldehyde composite as a resinous product of resorcinol and formaldehyde together with a vinylpyridine/styrene/butadiene terpolymer (from a latex thereof) and acrylonitrile/butadiene copolymer (from a latex thereof) blend, which may optionally include urea. As also hereinbefore discussed, the carbon fibers may optionally be impregnated with an epoxy prior to coating with the RFL adhesive composite.

In further addition to the invention, the rubber composition of at least one of the apexes, EMT inserts, and/or belt overlays, which contain the adhesive (RFL) coated carbon fibers may contain an in situ formed resin as the product of a methylene donor and methylene acceptor (e.g. resorcinol and hexamethoxymethyl melamine).

In practice, the RFL coated carbon fibers and methylene donor are mixed with the rubber composition prior to mixing the methylene acceptor upon which the methylene donor/methylene acceptor resin is formed in situ within the rubber composition in the presence of the RFL adhesive coated carbon fiber dispersion.

Representative of various methylene donor compounds are, for example, methylene donor compounds comprised of at least one of hexamethoxymethylmelamine, hexamethylenetetramine, methoxymethyl melamine, N,N'N"-trimethyl N,N'N"-trimethylolmelamine, hexamethylomelamine, N,N'N"-dimethylolmelamine, N-methylolmelamine, N,N'-dimethylolmelamine, N,N'N"-tris(methoxymethyl)melamine, N,N'N"-tributyl-N,N'N"-trimethyloi-melamine and hexaethoxymethylmelamine.

The amount of the methylene donor compound in the rubber composition may vary. For example, it may be contained, as a component of the resinous reaction product of methylene donor and methylene acceptor, in the rubber composition in an amount in a range of from 0.5 to 4 phr.

Representative of various methylene acceptor compounds are, for example, methylene acceptor compounds comprised of at least one of resorcinol, resorcinolic derivatives, monohydric phenols and derivatives thereof, dihydric phenols and derivatives thereof, polyhydric phenols and derivatives thereof, unmodified phenol novolak resins, modified phenol novolak resin, and novolak resins.

The term "methylene acceptor" is known to those having skill in such art and is used to describe the reactant or compound with which the methylene donor compound reacts to form what is believed to be an intermediate methylol monomer. It is envisioned that a condensation of the intermediate methylol monomer by formation of a methylene bridge produces a resin material. The initial reactant for which it is envisioned contributes the moiety that later forms the methylene bridge and ultimately the resin is referred to as being the methylene donor compound and the other reactant is referred to as being the methylene acceptor compound. Examples of methylene acceptors are indicated above and include, for example, but are not limited to those disclosed in US-B- 6,605,670, US-B- 6,472,457, US-B-5,945,500, US-B- 5,936,056, US-B- 5,688,871, US-B- 5,665,799, US-B-5,504,127, US-B- 5,405,897, US-B- 5,244,725, US-B- 5,206,389, US-B-5,194,513, US-B- 5,030,692, US-B- 4,889,481, US-B- 4,605,696, US-B-4,436,853 and US-B- 4,092,455. Examples of modified novolak resins include, for example, but are not limited to, cashew nut oil (e.g. cashew nut shell oil) modified phenol novolak resin, tall oil modified phenol novolak resin and alkyl modified phenol novolak resin such as, for example, SP6700^{™}. In one embodiment, the methylene acceptor compound is resorcinol.

The amount of methylene acceptor compound in the rubber composition may vary, depending somewhat upon selection and amount of methylene donor compound used as well as the selection of the methylene acceptor compound itself and a desired ratio of methylene donor compound to methylene acceptor compound. For example, the amount of methylene acceptor compound, as a component of the resinous reaction product of the methylene donor and methylene acceptor, may be in a range of from 0.5 to 5, alternatively from 1 to 3 phr.

A weight ratio of the methylene acceptor compound to methylene donor compound may range, for example, from 5/1 to 1/5.

In practice, the adhesive coating on the carbon fibers is the aforesaid resorcinol-formaldehyde resin composite of resorcinol-formaldehyde resin, which may also optionally contain urea, in the copolymer rubber binder.

In practice, the short carbon fibers may be significantly aligned (e.g. from 20 to 80 percent, or more, aligned which is considered herein to be significantly aligned on a relative basis, namely as compared to being randomly dispersed and not aligned altogether) with each other in the direction of the flow of the rubber composition by a contraction extrusion of the rubber composition (extrusion of the uncured rubber composition) through a suitable shaping die. By contraction extrusion, it is meant that the volumetric flow of the rubber composition extruded through a shaping die is contracted (e.g. by a reduction of the cross-section of the conduit through which the rubber composition flows) as the rubber composition approaches the die opening and is expanded (e.g. an en expansion of the cross-section of the conduit through which the rubber composition flows) as it leaves the shaping die opening. In such manner, then, a rubber tire tread may be formed which contains short carbon fibers which are substantially aligned with each other in parallel manner in the longitudinal, circumferential, direction of the tread (as it appears on the tire). Such alignment of the short carbon fibers may be beneficial in a sense of being able to maximize directional stiffness of the extruded rubber composition.

Alternatively, the short carbon fibers may be significantly aligned (e.g. from 10 to 40 percent, or more, aligned which is considered herein to be significantly aligned on a relative basis, namely as compared to being randomly dispersed and not aligned altogether) with each other in the direction substantially perpendicular (e.g. from 10 to 30 percent of from the perpendicular in a sense of being perpendicular) to the flow of the rubber composition by an expansion extrusion of the rubber composition (extrusion of the uncured rubber composition) through a suitable shaping die. By expansion extrusion, it is meant that the volumetric flow of the rubber composition extruded through a shaping die is expanded (e.g. the cross-section of the conduit through the rubber composition flows is enlarged through which the rubber composition flows) as the rubber composition approaches the die opening and is contracted (e.g. by a reduction of the cross-section of the conduit through which the rubber composition flows) as the rubber composition leaves the die opening.

### Example 1: Apex compounds

**Table 1**

| Non-productive Mix | Sample A (phr) | Sample B (phr) |
|---|---|---|
| Natural Rubber^{a} | 100 | 100 |
| Carbon Black^{b} | 80 | 80 |
| Processing Oil^{c} | 7 | 7 |
| Zinc Oxide | 5 | 5 |
| Stearic Acid | 2 | 2 |
| Tackifier^{d} | 2 | 2 |
| Chopped carbon fiber^{e} | 0 | 5 |
| | | |
| Productive Mix | | |
| Methylene donor^{f} | 3 | 3 |
| Methylene acceptor^{g} | 10 | 10 |
| Accelerator + retarder^{h} | 3.3 | 3.3 |
| Sulfur | 4.4 | 4.4 |

| | | |
|---|---|---|
| a. TSR20 b. N326 type c. naphthenic/paraffinic type d. SP1068 from Schenectady e. resorcinol-formaldehyde adhesive coated short carbon fibers, 5mm length, 7 micron diameter. f. hexamethylene tetramine g. phenol formaldehyde reactive type resin h. sulfenamide accelerator and phthalimide retarder | | |

**Table 2**

| | Sample A | Sample B |
|---|---|---|
| Carbon fiber | 0 | 5 |
| *Rheometer, 150° C* | | |
| Maximum torque, dNm | 91.3 | 95.4 |
| Minimum torque, dNm | 3.4 | 3.7 |
| Delta torque, dNm | 87.9 | 91.7 |
| T₉₀, minutes | 15.4 | 15.1 |
| *RPA (100° C, 11Hz)^{a}* | | |
| G¹ @ 1% strain (MPa) | 23.3 | 25.9 |
| G¹ @ 5% strain (MPa) | 16.2 | 17.9 |
| TanDelta @ 1% strain | 0.078 | 0.073 |
| TanDelta @ 5% strain | 0.112 | 0.116 |

| | | |
|---|---|---|
| a. Rubber Process Analyzer as RPA 2000^{™} instrument from Alpha Technologies. | | |

### Example 2: Ply coat/Overlay Compounds

**Table 3**

| Non-productive Mix | Sample C (phr) | Sample D (phr) |
|---|---|---|
| Natural Rubber^{a} | 100 | 100 |
| Carbon Black^{b} | 41 | 41 |
| Processing Oil^{c} | 9 | 9 |
| Zinc Oxide | 3 | 3 |
| Tackifier^{d} | 1 | 1 |
| Methylene acceptor^{e} | 1 | 1 |
| Chopped carbon fiber^{f} | 0 | 5 |
| Productive Mix | | |
| Sulfenamide accelerator | 1.4 | 1.4 |
| Methylene donor^{g} | 1.8 | 1.8 |
| Sulfur | 2.4 | 2.4 |

| | | |
|---|---|---|
| a. TSR20 b. N326 type c. naphthenic/paraffinic type d. SP1068 from Schenectady e. Pennacolite B-195 f. hexamethylene tetramine g. hexamethoxymethylmelamine | | |

**Table 4**

| | Sample C | Sample D |
|---|---|---|
| Carbon fiber | 0 | 5 |
| *Rheometer, 150° C* | | |
| Maximum torque, dNm | 17.0 | 17.3 |
| Minimum torque, dNm | 2.8 | 2.7 |
| Delta torque, dNm | 14.2 | 14.6 |
| T₉₀, minutes | 4.4 | 4.6 |
| *RPA (100° C, 11Hz)*^{a} | | |
| G¹ @ 1% strain (MPa) | 1.4 | 1.5 |
| G¹ @ 50% strain (MPa) | 0.64 | 0.65 |
| TanDelta @ 10% strain | 0.13 | 0.13 |
| | | |
| Adhesion to Nylon cord, N @ 23º C | 83 | 126 |

**Table 4A**

| | Sample C | Sample D | Sample C | Sample D |
|---|---|---|---|---|
| Stress-Strain | With Grain | Against Grain | With Grain | Against Grain |
| Tensile Strength | 16.0 | 16.3 | 14.4 | 13.1 |
| Elong at break, % | 506 | 517 | 436 | 448 |
| 100% modulus (MPa) | 1.45 | 1.31 | 3.05 | 2.09 |
| 300% modulus (MPa) | 7.05 | 6.55 | 8.79 | 7.43 |

### Example 3

**Table 5**

| | Sample E | Sample F | Sample G | Sample H | Sample I |
|---|---|---|---|---|---|
| Carbon fiber | 0 | 5 | 10 | 15 | 20 |
| *Rheometer, 150° C* | | | | | |
| Max T | 19.3 | 19.6 | 20.3 | 20.5 | 21.4 |
| Min T | 3.1 | 2.8 | 2.8 | 2.8 | 3.1 |
| Delta T | 16.2 | 16.8 | 17.1 | 17.7 | 18.3 |
| T₉₀ | 4.6 | 5.0 | 5.0 | 5.0 | 4.8 |
| *RPA (100° C, 11Hz)* | | | | | |
| G¹ @ 1% strain (MPa) | 1.27 | 1.33 | 1.46 | 1.49 | 1.63 |
| G¹ @ 50% strain (MPa) | 0.64 | 0.64 | 0.68 | 0.71 | 0.74 |
| TanDelta @ 10% strain | 0.13 | 0.14 | 0.14 | 0.14 | 0.13 |
| *Stress Strain* | | | | | |
| Tensile strength, WG | 16.1 | 14.0 | 12.7 | 12.2 | 12.0 |
| Tensile strength, AG | 15.5 | 13.8 | 13.1 | 12.8 | 12.4 |
| Elong % at break, WG | 518 | 436 | 367 | 335 | 311 |
| Elong % at break, AG | 552 | 510 | 494 | 456 | 438 |
| 100% modulus, WG | 1.4 | 3.2 | 4.7 | 5.5 | 6.2 |
| 100% modulus, AG | 1.2 | 1.5 | 1.7 | 2.1 | 2.5 |
| 300% modulus, WG | 6.8 | 8.6 | 10.2 | 10.8 | 11.7 |
| 300% modulus, AG | 5.4 | 6.0 | 6.3 | 7.5 | 8.0 |
| | | | | | |
| Adhesion to nylon cord @ 23° C | 83 | 113 | 122 | 115 | 133 |

The present invention provides the desired stiffness, while creating little change in hysteresis (heat build-up). Increased stiffness in the apex improves handling. Increased stiffness in the EMT insert provides runflat mobility and the necessary stiffness for runflat operation. Increased stiffness in the belt overlay provides overall stability to the crown area and improves handling, uniform wear, and durability. Typically, increased stiffness requires increased hysteresis, and is obtained with fillers and/or resins.

With reference to the above Examples and Tables, the data show an increased stiffness with little change in the hysteresis (heat build-up). With respect to the EMT insert, the increased stiffness helps provide support without heat build-up during normal running conditions, which is needed during run flat operation. With respect to Table 4A, the data shows an advantage of additional stiffness with the grain.

## Claims

1. A tire comprising a carcass, at least one belt structure (8, 19), a tread (10), and optionally an EMT insert (150), the carcass comprising at least one reinforced carcass ply (12) and two bead regions (14), each bead region (14) comprising a bead core (22), the at least one reinforced carcass ply (12) comprising a tum-up portion (20) wrapped around at least one of said bead cores (22), the tire further comprising sidewalls (16) disposed between the bead cores (22) and the tread (10) and at least one bead apex (24), **characterized in that** at least one of the bead apex (24) or, if present, the EMT insert (150) contain chopped carbon fibers.

2. The tire of claim 1, wherein the chopped carbon fibers are resorcinol-formaldehyde-latex (RFL) treated carbon fibers having a twist per 2,54 cm (1 inch) in a range of from 1.2 to 1.6.

3. The tire of at least one of the previous claims, wherein the chopped carbon fibers are adhesive coated carbon fibers.

4. The tire of at least one of the previous claims, wherein the chopped carbon fibers contain an in situ formed resin, the resin comprising a methylene donor and a methylene acceptor.

5. The tire of claim 4, wherein the methylene donor is chosen from at least one of the group comprising: hexamethoxymethylmelamine, hexamethylenetetramine, methoxymethyl melamine, N,N'N"-trimethyl N,N'N"-trimethylolmelamine, hexamethylomelamine, N,N'N"-dimethylolmelamine, N-methylolmelamine, N,N'-dimethylolmelamine, N,N'N"-tris(methoxymethyl)melamine, N,N'N"-tributyl-N,N'N"-trimethyloi-melamine and hexaethoxymethylmelamine and the methylene acceptor is chosen from at least one of the group comprising: resorcinol, resorcinolic derivatives, monohydric phenols and derivatives thereof, dihydric phenols and derivatives thereof, polyhydric phenols and derivatives thereof, unmodified phenol novolak resins, modified phenol novolak resin, and novolak resins.

6. The tire of at least one of the previous claims, wherein the chopped carbon fibers are carbon fibers which have a coating thereon which comprises an RFL adhesive coating comprising of a resorcinol-formaldehyde resin and a polymeric binder.

7. The tire of at least one of the previous claims, wherein the RFL adhesive is a resorcinol-formaldehyde resinous product of resorcinol and formaldehyde together with a vinylpyridine/styrene/butadiene terpolymer and acrylonitrinle/butadiene copolymer, which optionally contains urea.

8. The tire of at least one of the previous claims, wherein the chopped carbon fibers are impregnated with an epoxy prior to coating with the RFL adhesive composite.

9. The tire of at least one of the previous claims, wherein the chopped carbon fibers are randomly dispersed.

10. The tire of at least one of the previous claims 1 to 10, wherein the chopped carbon fibers are substantially aligned parallel to each other.

11. The tire of at least one of the previous claims, wherein the chopped carbon fibers have an average length within a range of from 1 to 10 millimeters and an average diameter within a range of from 2 to 15 microns.

12. The tire of at least one of the previous claims, wherein the chopped carbon fibers have a denier in the range of 667 dTex to 16000 dTex.

13. The tire of claim 9, wherein the chopped carbon fibers are inclined at an angle in the range of 30° to 60° relative to the circumferential direction of the tire.

14. The tire of at least one of the previous claims, wherein the chopped carbon fibers are present in the amount of from 0.5 to 30 phr.

15. The tire of claim 14, wherein the chopped carbon fibers are present in the amount of from 1 to 20 phr.

## Patentansprüche

1. Reifen, umfassend eine Karkasse, mindestens eine Gürtelstruktur (8, 19), eine Lauffläche (10) und optional einen EMT-Einsatz (150), wobei die Karkasse mindestens eine verstärkte Karkassenlage (12) und zwei Wulstbereiche (14) umfasst, wobei jeder Wulstbereich (14) einen Wulstkern (22) umfasst, wobei die mindestens eine verstärkte Karkassenlage (12) einen um mindestens einen der Wulstkerne (22) herumgeschlagenen Umschlagteil (20) umfasst, wobei der Reifen weiter zwischen den Wulstkernen (22) und der Lauffläche (10) angeordnete Seitenwände (16) und mindestens ein Wulstkernprofil (24) umfasst, **dadurch gekennzeichnet, dass** mindestens eines des Wulstkernprofils (24), oder, falls vorhanden, des EMT-Einsatzes (150), Kohlenstoff-Schnittfasern enthält.

2. Reifen nach Anspruch 1, wobei die Kohlenstoff-Schnittfasern mit Resorcinol-Formaldehyd-Latex (RFL) behandelte Kohlenstofffasern mit einer Verdrillung je 2,54 cm (1 Zoll) in einem Bereich von 1,2 bis 1,6 sind.

3. Reifen nach mindestens einem der vorgenannten Ansprüche, wobei die Kohlenstoff-Schnittfasern klebstoffbeschichtete Kohlenstofffasern sind.

4. Reifen nach mindestens einem der vorgenannten Ansprüche, wobei die Kohlenstoff-Schnittfasern ein in situ gebildetes Harz enthalten, wobei das Harz einen Methylendonator und einen Methylenakzeptor enthält.

5. Reifen nach Anspruch 4, wobei der Methylendonator ausgewählt ist aus mindestens einem aus der Gruppe, umfassend: Hexamethoxymethylmelamin, Hexamethylentetramin, Methoxymethylmelamin, N,N'N"-Trimethyl N,N'N"-Trimethylolmelamin, Hexamethylolmelamin, N,N'N"-Dimethylolmelamin, N-Methylolmelamin, N,N'-Dimethylolmelamin, N,N'N"-Tris(methoxymethyl)melamin, N,N'N"-Tributyl-N,N'N"-trimethylolmelamin und Hexaethoxymethylmelamin, und der Methylenakzeptor ausgewählt ist aus mindestens einem aus der Gruppe, umfassend: Resorcinol, Resorcinolderivate, einwertige Phenole und Derivate davon, zweiwertige Phenole und Derivate davon, mehrwertige Phenole und Derivate davon, unmodifizierte Phenol-Novolakharze, modifiziertes Phenol-Novolakharz, und Novolakharze.

6. Reifen nach mindestens einem der vorgenannten Ansprüche, wobei die Kohlenstoff-Schnittfasern Kohlenstofffasern sind, die eine Beschichtung darauf aufweisen, die eine RFL-Haftbeschichtung umfasst, bestehend aus einem Resorcinol-Formaldehydharz und einem polymeren Bindemittel.

7. Reifen nach mindestens einem der vorgenannten Ansprüche, wobei der RFL-Klebstoff ein Resorcinol-Formaldehyd-Harzprodukt von Resorcinol und Formaldehyd zusammen mit einem Vinylpyridin-Styrol-Butadien-Terpolymer und Acrylnitril-Butadien-Copolymer ist, das optional Ureum enthält.

8. Reifen nach mindestens einem der vorgenannten Ansprüche, wobei die Kohlenstoff-Schnittfasern vor der Beschichtung mit dem RFL-Haftverbundstoff mit einem Epoxy imprägniert werden.

9. Reifen nach mindestens einem der vorgenannten Ansprüche, wobei die Kohlenstoff-Schnittfasern willkürlich verteilt sind.

10. Reifen nach mindestens einem der vorgenannten Ansprüche 1 bis 10, wobei die Kohlenstoff-Schnittfasern im Wesentlichen parallel zueinander ausgerichtet sind.

11. Reifen nach mindestens einem der vorgenannten Ansprüche, wobei die Kohlenstoff-Schnittfasern eine durchschnittliche Länge in einem Bereich von 1 bis 10 Millimetern und einen durchschnittlichen Durchmesser in einem Bereich von 2 bis 15 Mikron aufweisen.

12. Reifen nach mindestens einem der vorgenannten Ansprüche, wobei die Kohlenstoff-Schnittfasern ein Denier im Bereich von 667 dTex bis 16.000 dTex aufweisen.

13. Reifen nach Anspruch 9, wobei die Kohlenstoff-Schnittfasern in einem Winkel im Bereich von 30° bis 60° bezüglich der Umfangsrichtung des Reifens geneigt sind.

14. Reifen nach mindestens einem der vorgenannten Ansprüche, wobei die Kohlenstoff-Schnittfasern in einer Menge von 0,5 bis 30 ThK vorhanden sind.

15. Reifen nach Anspruch 14, wobei die Kohlenstoff-Schnittfasern in einer Menge von 1 bis 20 ThK vorhanden sind.

## Revendications

1. Bandage pneumatique comprenant une carcasse, au moins une structure de ceinture (8, 19), une bande de roulement (10) et, le cas échéant, un insert EMT (150), la carcasse comprenant au moins une nappe de carcasse renforcée (12) et deux zones de talon (14), chaque zone de talon (14) comprenant une tringle de talon (22), ladite au moins une nappe de carcasse renforcée (12) comprenant une portion de retournement vers le haut (20) qui entoure au moins une desdites tringles de talons (22), le bandage pneumatique comprenant en outre des flancs (16) qui sont disposés entre les tringles de talons (22) et la bande de roulement (10), et au moins un bourrage sur tringle (24), **caractérisé en ce qu'**au moins un membre choisi parmi le bourrage sur tringle (24) et, s'il est présent, l'insert EMT (150) contient des fibres de carbone déchiquetées.

2. Bandage pneumatique selon la revendication 1, dans lequel les fibres de carbone déchiquetées représentent des fibres de carbone traitées avec un latex de résorcinol-formaldéhyde (RFL) possédant une torsion par 2,54 cm (1 pouce) dans la plage de 1,2 à 1,6.

3. Bandage pneumatique selon au moins une des revendications précédentes, dans lequel les fibres de carbone déchiquetées représentent des fibres de carbone enduites d'un adhésif.

4. Bandage pneumatique selon au moins une des revendications précédentes, dans lequel les fibres de carbone déchiquetées contiennent une résine formée in situ, la résine comprenant un donneur de groupes méthylène et un accepteur de groupes méthylène.

5. Bandage pneumatique selon la revendication 4, dans lequel le donneur de groupes méthylène est choisi parmi au moins un membre du groupe comprenant : l'hexaméthoxyméthylmélamine, l'hexaméthylènetétramine, la méthoxyméthylmélamine, la N,N'N"-triméthyl-N,N',N"-triméthylolmélamine, l'hexaméthylolmélamine, la N,N'N"-diméthylolmélamine, la N-méthylolmélamine, la N,N'-diméthylolmélamine, la N,N'N"-tris(méthoxyméthyl)-mélamine la N,N'N"-tributyl-N,N'N"-triméthylol-mélamine et l'hexaéthoxyméthylmélamine, et un accepteur de groupes méthylène est choisi parmi au moins un membre du groupe comprenant : le résorcinol, des dérivés résorcinoliques, des phénols monovalents et leurs dérivés, des phénols divalents et leurs dérivés, des phénols polyvalents et leurs dérivés, des résines de phénol novolaque non modifiées, des résines de phénol novolaque modifiées et des résines de novolaque.

6. Bandage pneumatique selon au moins une des revendications précédentes, dans lequel les fibres de carbone déchiquetées représentent des fibres de carbone munies d'un revêtement qui comprend un revêtement adhésif RFL comprenant une résine de résorcinol-formaldéhyde et un liant polymère.

7. Bandage pneumatique selon au moins une des revendications précédentes, dans lequel l'adhésif RFL représente un produit résineux de résorcinol-formaldéhyde de résorcinol et de formaldéhyde conjointement avec un terpolymère de vinylpyridine/styrène/butadiène et un copolymère d'acrylonitrile/butadiène, qui contient le cas échéant de l'urée.

8. Bandage pneumatique selon au moins une des revendications précédentes, dans lequel les fibres de carbone déchiquetées sont imprégnées avec un composé époxy avant leur enduction avec le composite RFL-adhésif.

9. Bandage pneumatique selon au moins une des revendications précédentes, dans lequel les fibres de carbone déchiquetées sont dispersées de manière aléatoire.

10. Bandage pneumatique selon au moins une des revendications précédentes 1 à 10, dans lequel les fibres de carbone déchiquetées sont disposées en un alignement essentiellement parallèle les unes par rapport aux autres.

11. Bandage pneumatique selon au moins une des revendications précédentes, dans lequel les fibres de carbone déchiquetées possèdent une longueur moyenne dans la plage de 1 à 10 millimètres et un diamètre moyen dans la plage de 2 à 15 microns.

12. Bandage pneumatique selon au moins une des revendications précédentes, dans lequel les fibres de carbone déchiquetées possèdent un denier dans la plage de 660 dTex à 16.000 dTex.

13. Bandage pneumatique selon la revendication 9, dans lequel les fibres de carbone déchiquetées sont inclinées en formant un angle dans la plage de 30 degrés à 60 degrés par rapport à la direction circonférentielle du bandage pneumatique.

14. Bandage pneumatique selon au moins une des revendications précédentes, dans lequel les fibres de carbone déchiquetées sont présentes en une quantité de 0,5 à 30 phr.

15. Bandage pneumatique selon la revendication 14, dans lequel les fibres de carbone déchiquetées sont présentes en une quantité de 1 à 20 phr.
